# EUROPÄISCHE PATENTANMELDUNG

(11) **EP 1 792 539 A1**
(43) Veröffentlichungstag der Anmeldung: **06.06.2007**
(21) Anmeldenummer: 06400034.2
(22) Anmeldetag: 03.11.2006
(51) Int. Cl.: A01L 15/00, A61D 9/00

(54) **Vorrichtung zur Behandlung von Hornspalten oder -rissen am Huf von Pferden oder anderen Huftieren**

(30) Priorität: 02.12.2005 DE 102005057782
(71) Anmelder: Puhl, Michael, 66679 Losheim am See (DE)
(72) Erfinder: Puhl, Michael, 66679 Losheim am See (DE)

(57) **Zusammenfassung**

Die Erfindung betrifft eine Vorrichtung zur Behandlung von Hornspalten oder -rissen am Huf von Pferden oder anderen Huftieren. Die Vorrichtung nach der Erfindung ist gekennzeichnet durch Halteteile (1,1'), die an den Längsseiten eines Hornspalts oder -risses einander gegenüberliegend am Huf zu befestigen sind, sowie die Halteteile (1,1') verbindende Einrichtungen (3-14) durch die der Abstand zwischen den Halteteilen (1,1') unter Aufweitung oder Verengung des Hornspalts oder-risses verstellbar ist.

## Beschreibung

Die Erfindung betrifft eine Vorrichtung zur Behandlung von Hornspalten oder -rissen am Huf von Pferden oder anderen Huftieren.

Durch Benutzung sind Reparatursets bzw. Behandlungssets bekannt, welche durch Verkleben der in einem Hornspalt oder -riss einander gegenüberliegenden Hornwände eine Stabilisierung und Fixierung des Spalts oder Risses ermöglichen.

Es ist ferner bekannt, Hornspalte durch Verdrahtung, ähnlich dem Schnürschuhprinzip, zu behandeln, und so durch Spannen des Drahtes den Spalt zu verengen und zu stabilisieren. Zusätzlich werden die einander gegenüberliegenden Spaltwände verklebt.

Eine weitere bekannte Möglichkeit zur Behandlung eines Hornspalts besteht darin, über dem Spalt eine Metalllochplatte zu verschrauben, um den Spalt in der vorhandenen Breite zu fixieren.

Der vorliegenden Erfindung liegt die Aufgabe zugrunde, eine neue Vorrichtung der eingangs erwähnten Art zu schaffen, die weitere Möglichkeiten zur Behandlung von Hufdefekten bietet.

Die diese Aufgabe lösende Vorrichtung nach der Erfindung ist gekennzeichnet durch Halteteile, die an den Längsseiten eines Hornspalts oder-risses einander gegenüberliegend am Huf zu befestigen sind, sowie die Halteteile verbindende Einrichtungen durch die der Abstand zwischen den Halteteilen unter Aufweitung oder Verengung des Hornspalts oder-risses verstellbar ist.

Vorteilhaft ermöglicht die erfindungsgemäße Vorrichtung nicht nur ein Zusammenziehen sondern auch Aufweiten von Hornspalten. Somit können schmerzhafte Einklemmungen der Huflederhaut in solchen Spalten beseitigt werden.

In einer bevorzugten Ausführungsform der Erfindung umfassen die Verbindungseinrichtungen eine sich von Halteteil zu Halteteil erstreckende Gewindestange, die mit wenigstens einem Ende in ein Gewinde an einem der Halteteile eingreift.

Während die Gewindestange am anderen Ende ohne Gewinde ausgebildet und drehbar am anderen Halteteil gelagert sein könnte, greift sie vorzugsweise auch am anderen Halteteil in ein Gewinde ein. Entsprechend ist die Gewindestange an einem Ende mit einem Links- und am anderen Ende mit einem Rechtsgewinde versehen.

Zwischen dem Linksgewinde und dem Rechtsgewinde lässt sich ein Drehkranz anbringen, der z.B. sich kreuzende Bohrungen für die Aufnahme eines die Gewindestange drehenden Hebelwerkzeugs aufweist.

Vorzugsweise sind die Halteteile gegeneinander in einer Führung verschiebbar, durch die insbesondere bei Druckbelastung der Halteteile durch die Verbindungseinrichtung eine Auseinanderbewegung der Halteteile entlang einer geraden Bahn gesichert ist.

In einer Ausführungsform der Erfindung weist die Führung sich von Halteteil zu Halteteil erstreckende Führungsstangen auf, die jeweils mit wenigstens einem Ende in eine Führungsbohrung an einem der Halteteile eingreifen. Zweckmäßig greifen die Führungsstangen an beiden Enden in eine solche Führungsbohrung ein.

Die Halteteile können jeweils durch einem Plättchen und einem an dem Plättchen angebrachten blockartigen Metallkörper bestehen, welcher die Gewindebohrungen oder/und Führungsbohrungen aufweist. Zweckmäßig sind die Plättchen entsprechend der Hufform gebogen und weisen Durchgangsbohrungen für die Befestigung, z.B. Schraubbefestigung, am Huf auf.

Die Erfindung wird nachfolgend anhand eines Ausführungsbeispiels und der beiliegenden, sich auf dieses Ausführungsbeispiel beziehenden Zeichnungen näher erläutert. Es zeigen:

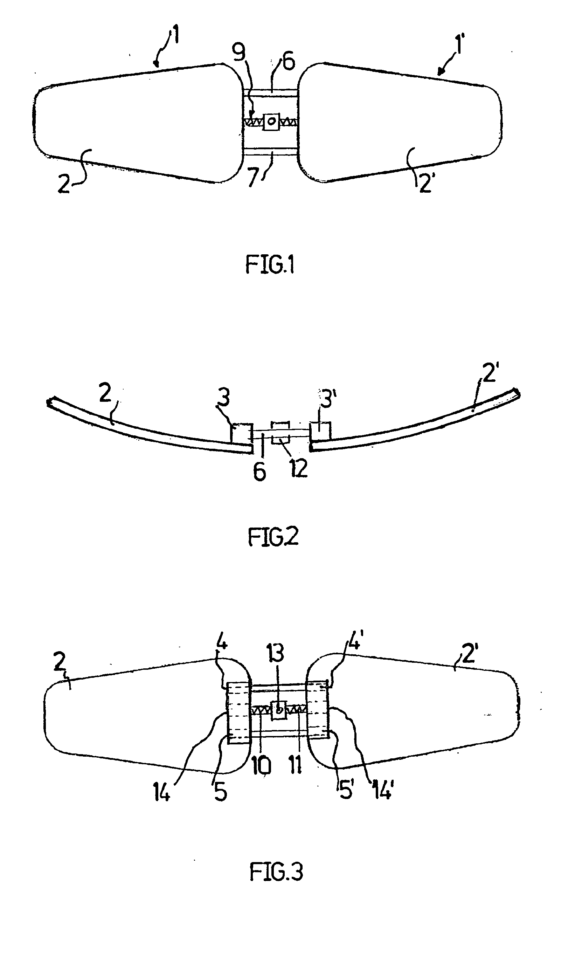

- Fig. 1: eine Vorrichtung nach der Erfindung in einer Vorderansicht,
- Fig. 2: die Vorrichtung von Fig. 1 in einer Seitenansicht, und
- Fig. 3: die Vorrichtung von Fig. 1 und 2 in einer Rückansicht.

Eine klammerartige, an der Vorderseite eines Hufes anzubringende Vorrichtung zur Behandlung von Hornspalten weist zwei Halteteile 1 und 1' auf. Die Halteteile bestehen jeweils aus einem dünnen Plättchen 2 bzw. 2' und einem schmalen, auf der dem Huf zugewandten Seite am Plättchen angebrachten Metallkörper 3 bzw. 3'.

Von Halteteil zu Halteteil erstrecken sich zwei Führungsstangen 6 und 7 sowie eine Gewindestange 8.

Die Führungsstangen 6 und 7 greifen mit einem Ende in eine Führungsbohrung 4 bzw. 5 in dem Metallkörper 3 und mit dem anderen Ende in eine Führungsbohrung 4' bzw. 5' in dem Metallkörper 3' ein.

Die Gewindestange 8 ist mit einem ein Rechtsgewinde tragenden Abschnitt 10 in eine Rechtsgewindebohrung 14 in dem Metallkörper 3 und mit einem ein Linksgewinde tragenden Abschnitt 11 in eine Linksgewindebohrung 14' im Metallkörper 3' eingedreht.

Zwischen den Abschnitten 10 und 11 der Gewindestange 8 befindet sich ein Drehkranz 12, welcher sich kreuzende Durchgangsbohrungen 13 aufweist.

In dem gezeigten Ausführungsbeispiel sind die Metallkörper 3 und 3' zueinander parallel und mit ihren Längsseiten bündig zu den einander gegenüberliegenden Rändern der Halteteile bzw. Plättchen angeordnet.

Die Plättchen 2 und 2' weisen nicht gezeigte Durchgangsbohrungen für eine Schraub- oder Nagelbefestigung am Huf auf.

Zur Behandlung eines Hornspalts werden die Halteteile 1 und 1', z.B. durch Verschraubung oder Verklebung der Plättchen 2 und 2' mit dem Huf, am Huf befestigt, wobei der Hornspalt zwischen den Halteteilen 1 und 1' verläuft. Zweckmäßig werden am Hornspalt einander gegenüberliegende Aussparungen für die Aufnahme der Metallkörper 3 und 3' gebildet. So können die Plättchen mit ihrer gesamten Fläche gegen den Huf anliegen.

Mit Hilfe eines in eine der Durchgangsbohrungen 13 am Drehkranz 12 eingreifenden Werkzeugs lässt sich die Gewindestange 8 drehen, wobei sich je nach Drehrichtung der Abstand zwischen den Halteteilen 1 und 1' vergrößert oder verringert. Entsprechend lässt sich mit Hilfe dieser Vorrichtung der zwischen Halteteilen liegende Hornspalt aufweiten oder verengen.

Aufweitungen kommen vor allem in Betracht, um schmerzhafte Einklemmungen der Huflederhaut im Hornspalt zu lösen. Bei Spaltverengung verbleibt die Vorrichtung am Huf, wenigstens bis ein in den verengten Spalt ggf. eingebrachter Klebstoff ausgehärtet ist.

Die Vorrichtung lässt sich ohne weiteres wiederverwenden.

Abweichend von dem gezeigten Ausführungsbeispiel könnten die Plättchen der Halteteile größer und mehr als nur ein Metallkörper daran angebracht sein. Entsprechend ließe sich die Zahl der Führungs- und Gewindestangen vergrößern.

## Patentansprüche

1. Vorrichtung zur Behandlung von Hornspalten oder-rissen am Huf von Pferden oder anderen Huftieren,
**gekennzeichnet durch** Halteteile (1,1'), die an den Längsseiten eines Hornspalts oder-risses einander gegenüberliegend am Huf zu befestigen sind, sowie die Halteteile (1,1') verbindende Einrichtungen (3-14), **durch** die der Abstand zwischen den Halteteilen (1,1') unter Aufweitung oder Verengung des Hornspalts oder -risses verstellbar ist.

2. Vorrichtung nach Anspruch 1,
**dadurch gekennzeichnet,**
**dass** die Verbindungseinrichtungen eine sich von Halteteil (1) zu Halteteil (1') erstreckende Gewindestange (8) umfassen, die an wenigstens einem Ende in eine Gewindebohrung (14,14') an einem der Halteteile (1,1') eingreift.

3. Vorrichtung nach Anspruch 2,
**dadurch gekennzeichnet,**
**dass** die Gewindestange (8) an einem Ende ein Linksgewinde und am anderen Ende ein Rechtsgewinde aufweist.

4. Vorrichtung nach Anspruch 3,
**dadurch gekennzeichnet,**
**dass** die Gewindestange (8) zwischen dem Linksgewinde und dem Rechtsgewinde einen Drehkranz (12) aufweist.

5. Vorrichtung nach Anspruch 4,
**dadurch gekennzeichnet,**
**dass** der Drehkranz (12) sich kreuzende Bohrungen (13) aufweist.

6. Vorrichtung nach einem der Ansprüche 1 bis 5,
**dadurch gekennzeichnet,**
**dass** die Halteteile (1,1') gegeneinander in einer Führung (3-7) verschiebbar sind.

7. Vorrichtung nach Anspruch 6,
**dadurch gekennzeichnet,**
**dass** die Führung (3-7) sich von Halteteil (1) zu Halteteil (1') erstreckende Führungsstangen (6,7) umfasst, die jeweils mit wenigstens einem Ende in eine Führungsbohrung (4,5;4',5') an einem der Halteteile (1,1') eingreifen.

8. Vorrichtung nach einem der Ansprüche 1 bis 7,
**dadurch gekennzeichnet,**
**dass** die Halteteile (1,1') jeweils durch ein Plättchen (2,2') und wenigstens einen blockartigen Metallkörper (3,3') gebildet sind.

9. Vorrichtung nach Anspruch 8,
**dadurch gekennzeichnet,**
**dass** der Metallkörper (3,3') die Gewindebohrung (14,14') und/oder die Führungsbohrungen (4,5;4',5') aufweist.

10. Vorrichtung nach Anspruch 8 oder 9,
**dadurch gekennzeichnet,**
**dass** die Plättchen (1,1') entsprechend der Hufform gebogen sind und ggf. Durchgangsbohrungen für eine Schraub- oder Nagelverbindung mit dem Huf aufweisen.

11. Vorrichtung nach einem der Ansprüche 8 bis 10,
**dadurch gekennzeichnet,**
**dass** die Metallkörper (3,3') mit ihrer Längsseite bündig zu den einander gegenüberliegenden Rändern der Blättchen angeordnet sind.
